# EUROPEAN PATENT SPECIFICATION

(11) **EP 1 210 695 B1**
(45) Date of publication and mention of the grant of the patent: **13.09.2006**
(21) Application number: 00948465.0
(22) Date of filing: 11.07.2000
(51) Int. Cl.: G07F 7/10, G06F 12/14, G06K 19/073

(54) **CHECKING OF RIGHT TO ACCESS**
ÜBERPRÜFUNG DER ZUGANGSBERECHTIGUNG
VERIFICATION DE DROIT D'ACCES

(30) Priority: 06.08.1999 SE 9902846; 24.08.1999 US 150438 P
(43) Date of publication of application: 05.06.2002
(73) Proprietor: Precise Biometrics AB, 224 64 Lund (SE)
(72) Inventor: WIEBE, Linus, S-211 56 Malmö (SE)
(74) Representative: Perklev, Karin Cecilia
(86) International application number: PCT/SE2000/001472
(87) International publication number: WO 2001/011577

(56) References cited:
- EP-A- 0 864 996
- WO-A1-98/01820
- DE-A1- 19 811 332
- FR-A1- 2 587 522
- JP-A- 10 312 459
- US-A- 5 144 680
- US-A- 5 239 166
- US-A- 5 869 822

## Description

### Field of the Invention

The present invention relates to a system for checking the right to access to sensitive information, based on biometric data. The invention also relates to a data carrier, a processing unit and a method of checking, based on biometric data, the right to access to sensitive information stored on a data carrier.

### Background of the Invention

The access to information, to a room or the like must in many cases be restricted to certain individuals. This is the case, for instance, when electronic money transactions occur via the Internet, when in a hospital the access to case records is to be limited, or when only certain individuals in a place of work are allowed to have access to certain information or certain rooms.

To this end, use is often made of what is referred to as intelligent cards or smart cards. A smart card can be described as a card in the size of an account card which has a built-in processor or a signal processing means, a memory and a communication interface. Sensitive information is stored on all smart cards used in the above contexts. The sensitive information consists of one or more parts. A first part of the sensitive information is a so-called template which is stored on each smart card and can be described as reference information, stored in advance, about the user of the card. It is with this reference information that a comparison is made every time the card user wishes to verify his right to use the card. The template is further the only sensitive information that need be available on the smart card if it is intended for use as a pure "key card" and to generate a "yes" or "no", for instance, for physical access to a room.

A second part of the sensitive information is available on cards that are not used as "key cards" but as more absolute information carriers. The second part of the sensitive information then consists of computer files which may contain data of the type which is mentioned by way of introduction and which only the card user may access. When the card user wants to verify that he has the right to access to the sensitive information stored in the computer files on the smart card, he places the card in a terminal and enters a PIN code (PIN = Personal Identification Number). The pin code is limited to 16 bytes and usually consists of four digits between zero and nine which are matched with the template stored on the card. If the pin code corresponds with the template, "the card is unlocked", i.e. the user gains access to the computer files containing the sensitive information. This differs from the case where the card is used as a pure "key card" and only a "yes" or a "no" is generated in response to the matching with the template.

Pin codes are presently used in many situations, and many people find it difficult to remember a number of different pin codes. Therefore, many people choose to use the same pin code in a number of different situations, thus deteriorating security. For this reason, and with a view to further increasing security, alternative solutions have been presented, in which a user instead identifies himself with the aid of biometric information. By biometric information is meant information which is body-related and individual-specific for the user and which consists of, in the context of the present invention, the pattern of the user's fingers. A method in which a user identifies himself with the aid of biometric information according to prior art typically proceeds as follows:

The user places his smart card in a terminal and one finger on a sensor which generates a digital image, i.e. a digital representation, of his finger. The digital image of the finger proceeds to an external processor, for instance a personal computer, where it is preprocessed. In the preprocessing, the amount of information in the image is reduced so that, for instance, a binarised image or parts of a binarised image are generated. A corresponding preprocessed image has been stored on the card as a template. The external processor collects the template from the card and compares this with the pre-processed image of the finger. In case of correspondence, the external processor transmits a pin code to the card. This pin code acts as a key and gives access to the sensitive information stored in the memory of the card. If the template and the preprocessed image information do not correspond with each other, no pin code is transmitted and the user cannot access the computer files with the sensitive information on the card.

Even if biometry is used so that the user will not need to use a pin code, a pin code is still transmitted at the last stage of the verification process since this pin code is necessary for the "unlocking" of specific files containing sensitive information on the smart card. Thus the pin code must be hardcoded either in the software for the application which communicates with the card, or in some hardware in the unit where the card is read and written. Consequently no significant increase of the security is achieved despite the use of biometry since there is still a risk that someone may access the computer files with sensitive information on the card by transmitting the pin code to the card.

Also in the case where the only action of the smart card is to generate a yes or no, it is necessary to encrypt the information on the card to be able to guarantee that the yes/no that is transmitted is unique for each card or transmission. This causes the same problems as described above since the key for encryption must be stored somewhere.

A further problem is that the template with which the matching occurs must be read from the card into the external processor in which the comparison with the user's biometric data takes place. In the first place this is a security risk, and in the second place there are directives issued by computer security authorities in certain countries which recommend that a biometric template should never leave the smart card.

One solution to the above problems is presented in Swedish Patent No. 8101707-1 which discloses an account card type data carrier which is provided with verification equipment comprising a sensor on which a user places one of his fingers. The sensor records papillary line information from the user's finger and calculates an identification bit sequence which is compared with a previously stored reference bit sequence. If the bit sequences conform with each other, an acceptance signal is generated, which can activate an indication means or a connecting means which makes the data carrier useable.

Although this solution eliminates the use of pin codes and lets the template remain on the card all the time, certain drawbacks still remain. For example, the card will be relatively expensive to make generally accessible to a large number of users since it contains a large number of components and must be specially made. Owing to the large number of components and the fact that all operations are effected on the card, also the probability increases that the card will meet with interruptions. Furthermore it is difficult to protect the sensor on the card against external mechanical action.

EP-0 864 996 A2 discloses a few different feature-based fingerprint matching algorithms, in which feature values are stored as registered data in a memory of a portable electronic device, and in which features of an inputted fingerprint is transmitted to the portable electronic device and are therein matched to the registered data.

DE-198 11 332 A1 discloses a feature-based fingerprint matching algorithm, in which the position (x, y coordinates) of each feature is sent from a chip card to a processing device, and wherein the processing device responds by sending, for each feature, a type indicator, that is used for comparison, in the chip card, with the stored type indicator of the respective feature.

### Summary of the Invention

An object of the present invention therefore is to obviate, or at least alleviate, the above problems and to provide an alternative system for checking the right to access to sensitive information.

According to the invention, this object is achieved by a system, a portable data carrier, a processing unit, and methods which have the features defined in appended independent claims, preferred embodiments being stated in appended dependent claims.

The invention is defined by the respective independent claim.

The expression "sensitive information" should be interpreted in a very wide sense. The sensitive information may be information stored on the actual data carrier in the form of computer files; a "key" which makes it possible to use the data carrier, for example, to open a door of a room and give the user physical access to information of a type other than that which can be stored on the actual data carrier; and different types of so-called digital certificates. By biometric data is meant data representing an individual-specific characteristic of an individual. Examples of such data can be the pattern of the individual's fingers.

The data carrier on which the sensitive information is stored may exist in a large number of different embodiments. The only common features that are necessary between the different embodiments are that it should contain a memory, a signal processing means, such as a processor, an FPGA (Field Programmable Gate Array) or an ASIC (Application Specific Integrated Circuit), and a communication means with the aid of which it can communicate with an external processing unit. For the data carrier to be usable in as many situations as possible, it is important for it to be portable, i.e. that a user should be able to carry the data carrier in a simple way without requiring any additional aids.

According to the invention, the data carrier thus is intended for use together with a processing unit containing a signal processing means, which is adapted to pre-process current biometric data of the person who on a certain occasion uses the data carrier together with the processing unit to gain access to the sensitive information. The term preprocessing thus is here used in a wide sense and intends to comprise all types of signal processing on the current biometric data, which has for its purpose to extract a sufficient amount of information from the current biometric data to be able to make a safe comparison with prestored biometric reference data in the memory of the data carrier. The signal processing means of the data carrier is further adapted to make this comparison. By current biometric data is meant that the user must present the biometric data to the system on each occasion when he wishes to gain access to the sensitive information.

By making the check of the right to access on the data carrier, no pin code need be generated in the processing unit and transferred to the data carrier. The preprocessed biometric data is transferred instead, which is much more difficult to counterfeit since it is more complex than an ordinary pin code.

Owing to the preprocessing in the external processing unit, the data carrier can be of an inexpensive standard type, such as a Java card or a MULTOS card, and need not be specially made and contain a large number of components, which is the case of prior art. Only the operating system on the data carrier has access to the biometric reference data and other sensitive information stored thereon. This also implies that the biometric reference data in the memory of the data carrier need not leave the data carrier to be compared with the preprocessed biometric data. The final decision whether the right to access to the sensitive information exists or not is thus made by the operating system on the actual data carrier. This, too, causes a further increase of security.

According to a preferred embodiment, the preprocessed biometric data and the biometric reference data consist of digital representations of an individual-specific parameter. By a digital representation of an individual-specific parameter is meant a recording in digital form of a body-related characteristic which somehow is unique for an individual. Example of this is a digital image of the pattern on the individual's fingers.

The digital representations consist of digital images. The digital images can be recorded by means of an optical sensor, a capacitive sensor, or in some other way. The main thing is that the individual-specific information is recorded in the digital image. The advantage of using digital images is that they can quickly and easily be recorded and easily be processed in different ways.

In the case where a digital image constitutes the digital representation, the signal processing means of the processing unit is advantageously, in the preprocessing, adapted to perform a binarisation of the digital image which represents the current biometric data. Each pixel in the digital image which represents the current biometric data has a colour or grey scale value. The binarisation implies that the colour or grey scale values of the pixels are compared with a threshold value. If the value of the pixel is greater than the threshold value, it is converted into white, and if it is smaller than the threshold value, it is converted into black or vice versa. Through this binarisation, the data quantity in the digital image decreases significantly since black and white can be represented by only one bit each instead of a larger number of bits, which is required for a pixel that is grey or has some other colour. Simultaneously, the contours of the image are essentially retained, which represent the biometric data which is specific to the user. The threshold value with which the pixels of the digital image are compared can either be the same for all pixels, or vary between different parts of the digital image.

The purpose of reducing the data quantity in the original digital image in the preprocessing as described above is to obtain a digital image containing a sufficient data quantity to enable a safe comparison on the data carrier. At the same time this comparison should not require too much time.

In a preferred embodiment of the invention, the signal processing means of the data carrier is adapted to carry out a two-dimensional comparison of at least a partial area of the biometric reference data and at least a partial area of the preprocessed biometric data. By a two-dimensional comparison is meant that the signal processing means directly compares areas of the preprocessed biometric data and in the reference data. As a result, no reference point or similar aid need be used in the comparison. To reduce the time expenditure in this comparison, use is advantageously made of partial areas of the two images. A partial area of the image containing the digital reference data is compared successively with different partial areas of the preprocessed image until sufficient correspondence between the partial areas is achieved. Subsequently, additional partial areas of the representation of the digital reference data are compared with the preprocessed biometric reference data until a predetermined comparison criterion has been satisfied. The comparison criterion may vary between different applications, and if it is not satisfied, the biometric reference data is not considered to correspond with the current biometric data. The partial areas used in the comparison may vary in size, form and position. The important thing is that they are selected in such manner that the individual-specific information in the areas will be maximal.

In the case where the digital representation has a format other than a digital image, the preprocessing and the comparison will, of course, be different from the processing and comparison described above. Just as described above, however, the purpose of the preprocessing is to reduce the data quantity in the original digital representation to obtain a digital representation containing a sufficient data quantity to enable a safe comparison on the data carrier.

In one more embodiment, the signal processing means of the data carrier is further adapted to determine, in case of correspondence between the preprocessed biometric data and the biometric reference data, which operations the processing unit is allowed to perform on the sensitive information. When the preprocessed biometric data has once been transferred from the processing unit to the data carrier, the signal processing means of the data carrier thus first makes the final check without involving the signal processing means of the processing unit. If, in this check, it is found that the preprocessed biometric data and the biometric reference data correspond with each other, the signal processing means of the data carrier grant the processing unit certain rights as to which operations it is allowed to perform on the sensitive information. These operations can be, for example, merely reading sensitive information from the memory of the data carrier, making changes in the existing sensitive information in the memory of the data carrier, supplying additional sensitive information to the memory of the data carrier, or various combinations of the above operations.

In the presently most preferred embodiment, the current biometric data consists of a fingerprint, which enables a simple recording process.

According to another aspect, the memory of the data carrier contains feature reference data. If a lower security level and a higher verification speed are desired, feature data can instead be used to verify the user's right to use the card. The comparison of features in fingerprints is well known in the art, and this verification process can be designed by a person skilled in the art in a manner that is appropriate for the application at issue.

With a view to increasing the verification speed while at the same time maintaining a high security level, the signal processing means of the processing unit is adapted to extract, in the preprocessing, features from the fingerprint and compare these with feature reference data that has been transferred from the data carrier to the processing unit. As a result, the higher capacity of the signal-processing device in the processing unit can be utilised. The comparison of feature data that is made in the preprocessing may serve various purposes. For instance, by comparing the features it is possible to determine the rotation as well as the translation of the current fingerprint relative to the reference fingerprint. This results on the one hand in improved security and, on the other hand, quicker verification since fewer combinations of rotation and translation need be examined on the data carrier. This verification process can thus be said to constitute a type of "hybrid matching" in which on the one hand a traditional comparison of feature data from the fingerprint is effected and, on the other hand, a two-dimensional comparison of partial areas of the digital images is effected.

The data carrier is a standard type smart card, for example a Java or MULTOS card, i.e. simple, inexpensive types of data carrier which are easy to adjust to different applications and are easy for a user to carry. A standard type smart card containing data about a certain user can thus be used in many different situations since it is just standardised and since the operating system on the card handles the files so that the handling of the files is independent of the application for which the card is used, which is not the case with the prior art data carriers described above.

According to another aspect of the invention, it comprises a portable data carrier having a memory which contains sensitive information, a signal processing means and a communication means. The communication means of the data carrier is adapted to receive preprocessed biometric data from a processing unit and to transfer the same to the signal processing means, which is adapted to compare the received preprocessed biometric data with biometric reference data stored in the memory.

Thus the data carrier is adapted to receive pre-processed biometric data. The data received by the data carrier can represent different individual-specific parameters, for instance of the type described above, and can have different formats. The received biometric data must be some type of data which is preprocessed in a processing unit. It is not sufficient, for example, to place one's finger on the data carrier, but the biometric data must be accessible in an electronically readable format. The preprocessing, however, can be more or less extensive, and the format of the preprocessed data may vary to a great extent depending on the application at issue. The decisive factor for which type of preprocessed data can be received by the data carrier is that it must be of the same type as the biometric reference data stored in the memory of the data carrier, and that the data carrier must have sufficient capacity to be able to at least perform the comparison with the biometric data stored in the memory of the data carrier.

In the data carrier, the signal processing means is adapted to compare the pre-processed biometric data with the biometric reference data by comparing digital representations of an individual-specific parameter. The advantage of using digital representations is evident from the above discussion in connection with the description of the system. The digital representations consist of digital images.

According to one more aspect of the invention, it comprises a processing unit for checking the right to access to sensitive information stored on a portable data carrier, said check being based on current biometric data of an individual, the processing unit comprising a memory, a signal processing means and a communication means. The signal processing means of the processing unit is adapted to preprocess biometric data of the individual and transfer this to the data carrier via the communication means. A number of different types of preprocessing can be carried out depending on the type of current biometric data supplied by the individual. However, the purpose is always to reduce the amount of information in the recorded current biometric data so as to give it a format that allows a transfer to the data carrier and a final comparison on the same. The processing unit can be any type of unit having a memory, a signal processing means and a communication means, and advantageously consists of a computer.

Moreover, the processing unit can be equipped with a sensor for recording current biometric data of the individual in the form of a digital representation, such as a digital image. Thus, no additional equipment need be connected to the processing unit, which means that the recording and preprocessing can be integrated so that the process from the recording of the user's biometric data up to and including the transfer to the portable data carrier will be quick. Furthermore also security increases since current biometric data need not be transferred between a special recording unit and the processing unit. The sensor can also be better protected against mechanical action compared with the case where it is arranged on the actual data carrier.

The current biometric data is a fingerprint and the signal processing means of the processing unit is adapted to extract, in the preprocessing, features from the fingerprint and compare these with feature reference data that has been transferred from the data carrier to the processing unit. The purpose of this comparison of features is apparent from the above discussion in connection with the system.

According to a last aspect of the invention, it comprises a method of checking, based on current biometric data of a person, the right to access to sensitive information stored on a portable data carrier. The method comprises the steps of
- preprocessing the current biometric data in a processing unit;
- transferring the preprocessed biometric data to the data carrier;
- comparing on the data carrier the preprocessed biometric data with biometric reference data stored on the data carrier; and
- in case of correspondence between the preprocessed biometric data and the biometric reference data, granting the person the right to access to the sensitive information.

Preferred variants of this method are presented in the appended method claims. These methods result in the same advantages as have been mentioned above in the discussion of the system, the data carrier and the processing unit.

### Brief Description of the Drawings

The invention will now be described in more detail by way of an embodiment with reference to the enclosed schematic drawings.
Fig. 1 is a schematic drawing showing a system according to the invention.
Fig. 2 is a block diagram showing a method according to the invention for recording biometric reference data on a data carrier.
Fig. 3 is a block diagram showing a method according to the invention for checking the right to access to sensitive information stored on a data carrier.

### Description

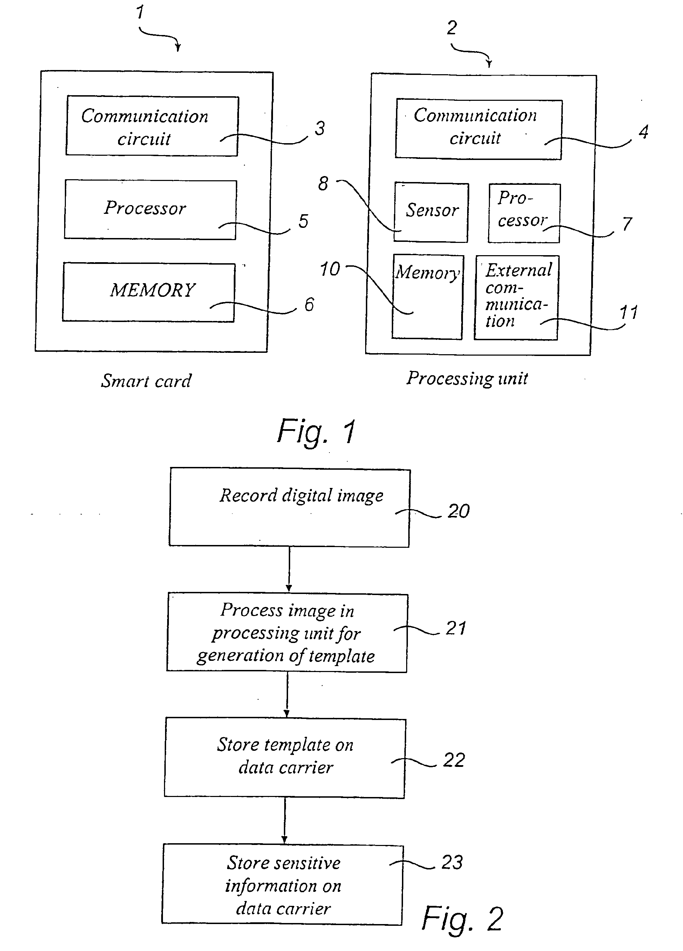

Fig. 1 is a schematic view of a system according to the invention, which consists of a data carrier 1 in the form of a smart card and a processing unit 2, which in this case is a computer. The smart card 1 is an ordinary standard type card, for instance a Java or MULTOS card, and has a communication means 3 which is adapted to communicate with a communication means 4 in the computer 2. The smart card 1 further has a signal-processing unit in the form of a processor 5 and a memory 6. The memory 6 contains sensitive information on the one hand in the form of computer files to which the person using the system wishes to gain access and, on the other hand, in form of a template which consists of biometric reference data of the user. The template consists of a preprocessed digital representation in the form of a digital image, and it will be described below in connection with Fig. 2 how this image is generated. In addition to the sensitive information and the template, the memory 6 also contains software which the processor 5 uses to compare the pre-processed image of the user's biometric data, which has been transferred from the computer 2 to the smart card 1, and the template.

The computer 2 comprises a signal processing means or a processor 7, which is used in the preprocessing of the user's biometric data. The biometric user data is recorded by means of a sensor 8, which in this embodiment consists of a capacitive sensor. However, also other known types of sensors can be used that can record fingerprints, such as heat sensors, or optical sensors. The sensor 8 is connected to the processor 7 and to a memory 10, in which software is stored for the preprocessing of the biometric data that the processor 7 carries out. The computer 2 also comprises circuits 11 for external communication with other units. The communication between the different units in the computer 2 and on the smart card 1, respectively, occurs via a data bus (not shown).

For a comparison to be made on the card 1, it is necessary to produce a template with which the user's biometric data can be compared each time a verification of the right to access to the sensitive information on the card 1 need be made. A description how this is done follows below.

Fig. 2 is a block diagram showing how a template and sensitive information are recorded and stored on the data carrier or smart card 1. In step 20, an image of the user's finger is recorded by means of the sensor 8 in the computer 2. The result of the recording is a digital image in grey scale which represents the user's fingerprint. In step 21, this digital image is preprocessed so as to generate a template. This preprocessing can be carried out in many ways, one of which will be described below.

First, a check of the image quality of the fingerprint is carried out. Among other things, it is checked whether the user has applied his finger with sufficient pressure on the sensor 8 and so that any moisture on the user's finger has not made it impossible for the sensor 8 to distinguish between "crests" and "troughs" on the finger. If the quality of the image is insufficient, the user is requested to correct the deficiencies in a suitable manner.

When a digital image in grey scale of sufficient quality has been recorded by the sensor 8, a binarisation of the image occurs. The binarisation implies that the pixels of the image are compared with a grey scale threshold value. The pixels which have a value smaller than the grey scale threshold value are converted to white and those having a value greater than the grey scale threshold value are converted to black. The grey scale threshold value can be the same for the entire image or vary between different parts of the image. The binarisation algorithm can further be refined, so that the pixels are compared with the surroundings, so as to prevent, for example, individual pixels from being white if all the surrounding pixels are black. This adaptation is easily carried out by a person skilled in the art.

After the binarisation, a number of areas of the image are selected to be stored in the form of a template. One of the areas is selected to be positioned fairly central in the image, and the others, the number of which usually varies between four and eight depending on the desired security level, may have varying positions relative to the central area. The size of the selected areas is in this embodiment 48 x 48 pixels, but can easily be adjusted by a person skilled in the art according to the existing requirements. The size and position of the various areas are selected so as to comprise as much individual-specific information as possible. For instance, areas with curved lines are of greater interest than areas with straight parallel lines.

Subsequently the template is transferred from the computer 2 via the communication circuits 3, 4 to the memory 6 of the smart card 1 in step 22. When the template has been transferred, sensitive information can also be transferred from the computer 2 and stored in the memory 6 of the smart card 1, step 23, if desired. The recording of templates for the card owner is made only once. The sensitive information can, however, be replaced when necessary.

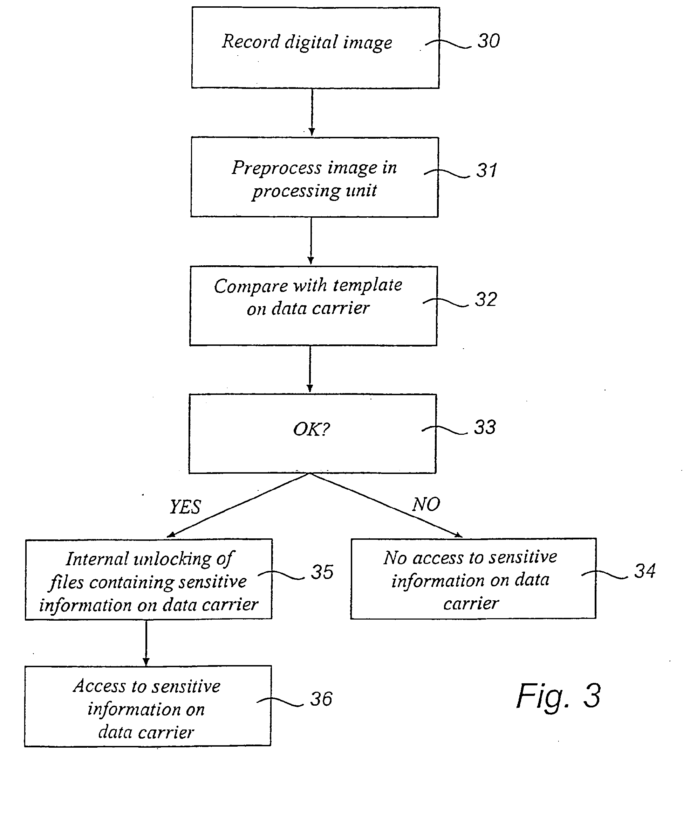

Fig. 3 shows a verification process when a user wants to get hold of the sensitive information stored on the smart card 1. First he places his smart card 1 in a card reader either directly in the computer 2 or in a separate card reader communicating with the computer 2. He then places his finger on the sensor 8 and a digital image is recorded in step 30 in the same way as described above. The image is preprocessed in the computer 2 in step 31 in the same way as in the recording of the template, except that no partial areas are selected, so that otherwise it has the same format as the template stored on the smart card 1. Subsequently, the preprocessed image is transferred to the smart card 1 via the communication circuits 3, 4 where it is matched with the template, step 32. In the matching, the central partial area of the template "sweeps" over the preprocessed image and in every position a comparison is carried out pixel by pixel. If a pixel in the template corresponds with a pixel in the preprocessed image, a given value, for example 1, is added to a sum. If the pixels do not correspond, the sum is not increased. When the central partial area of the template has swept over the entire preprocessed image, a position is obtained, where the central partial area of the template best overlaps a partial area of the preprocessed image.

Next, the remaining partial areas of the template are matched with the preprocessed image at issue. This matching is less time-consuming since an approximate position of the remaining partial areas is already known from the recording occasion for the template. When the pixels in the remaining partial areas of the template have been compared with corresponding areas of the pre-processed image, a total match value between 0% (i.e. no match at all) and 100% (i.e. exact match) is obtained. This match value is compared with a predetermined threshold value, step 33. A more exhaustive description of the recording of templates and the verification is to be found in Applicant's International Patent Application No. PCT/SE99/00553.

If the degree of correspondence between the preprocessed image and the template is lower than the threshold value, step 33, the smart card returns a signal to the computer 2 in step 34, which refuses the user access to the sensitive information on the smart card 1, whereupon the process is ended. If, on the other hand, the template and the preprocessed image correspond with each other, the processor 5 of the smart card 1 unlocks the files containing sensitive information, step 35. Then the computer 2 gets access to this information, step 36, and this and other sensitive information can be exchanged between the two units.

Although a special embodiment of the invention has been described above, it is obvious to those skilled in the art that many alternatives, modifications and variations are feasible in the light of the above description. For example, a reference point can be located in the verification to achieve a quicker comparison between the images, and the areas of the image that are selected to be matched can be selected on the basis of other criteria than those described above. Therefore the invention is considered to comprise all such alternatives, modifications and variations that are within the scope of the appended claims.

## Claims

1. A system for checking the right to access to sensitive information, the checking being based on a digital image of a fingerprint of a person whose right to access to the sensitive information is to be checked, the system comprising
- a portable data carrier (1) comprising a signal processing means (5), a communication means (3) and a memory (6) containing the sensitive information, feature reference data of a fingerprint of a person who has the right to access to the sensitive information and fingerprint reference data, i.e. a digital image of at least a partial area of the fingerprint of the person who has the right to access to the sensitive information, and
- a processing unit (2), which is adapted to receive the digital image of fingerprint from the person whose right to access to the sensitive information is to be checked, comprising a memory (10), a signal processing means (7) and a communication means (4),
wherein the signal processing means (7) of the processing unit (2) is adapted to pre-process the digital image of fingerprint, the pre-processing comprising extracting features from the digital image of fingerprint and comparing them with the feature reference data which has been transferred from the data carrier to the processing unit, and to transfer the pre-processed digital image of fingerprint to the signal processing means (5) of the data carrier (1) with the aid of the communication means (3, 4), and
wherein the signal processing means (5) of the data carrier (1) is adapted to compare the received pre-processed digital image of fingerprint with the fingerprint reference data stored in advance in the memory (6) of the data carrier (1) to determine whether the right to access to the sensitive information exists.

2. A system as claimed in claim 1, wherein the signal processing means (7) of the processing unit (2) is, in the pre-processing, adapted to perform a binarisation of the digital image of the fingerprint.

3. A system as claimed in any one of the preceding claims, wherein the signal processing means (5) of the data carrier (1) is adapted to perform a two-dimensional comparison of said at least a partial area of the fingerprint of the person who has the right to access to the sensitive information and at least a partial area of the pre-processed digital image of the fingerprint.

4. A system as claimed in any one of the preceding claims, wherein the signal processing means (5) of the data carrier (1) is further adapted to determine, in case of correspondence between the pre-processed digital image of the fingerprint and the fingerprint reference data, which operations the processing unit (2) is allowed to carry out on the sensitive information.

5. A system as claimed in any one of the preceding claims, wherein the data carrier (1) is a smart card.

6. A system as claimed in any one of the preceding claims, wherein the signal processing means (7) of the processing unit (2) is adapted to determine the rotation as well as the translation of the digital image of the fingerprint relative to the fingerprint reference data.

7. A portable data carrier (1) comprising a signal processing means (5), a communication means (3) and a memory (6) containing sensitive information, feature reference data of a fingerprint of a person, who has the right to access to the sensitive information, and fingerprint reference data, i.e. a digital image of at least a partial area of the fingerprint of the person who has the right to access to the sensitive information; wherein the signal processing means (5) is adapted to transfer the feature reference data to a processing unit (2) for pre-processing of a digital image of a fingerprint for a person whose right to access to the sensitive information is to be checked, wherein the communication means (3) is adapted to receive the pre-processed digital image of the fingerprint from the processing unit (2) and transfer the same to the signal processing means (5); and wherein the signal processing means (5) is adapted to compare the received pre-processed digital image of the fingerprint with the fingerprint reference data stored in the memory (6) to determine whether the right to access to the sensitive information exists.

8. A portable data carrier according to claim 7, wherein the signal processing unit (5) is adapted to perform a two-dimensional comparison of said at least a partial area of the fingerprint of the person who has the right to access to the sensitive information and at least a partial area of the pre-processed digital image of the fingerprint.

9. A portable data carrier according to claims 7 or 8, wherein the data carrier is a smart card.

10. A processing unit (2) for use when checking the right to access to sensitive information stored on a portable data carrier (1), said checking being based on a digital image of a fingerprint of a person whose right to access to the sensitive information is to be checked, the processing unit (2), which is adapted to receive the digital image of the fingerprint comprising a memory (10), a signal processing means (7) and a communication means (4); wherein the signal processing means (7) is adapted to pre-process the digital image of the fingerprint, the pre-processing comprising extracting features from the digital image of the fingerprint and comparing them with feature reference data of a fingerprint of a person who has the right to access to the sensitive information, which feature reference data has been transferred from a data carrier to the processing unit, and to transfer the pre-processed digital image of the fingerprint, which comprises a digital image of a fingerprint of the person whose right to access to the sensitive information is to be checked, to the data carrier, where the pre-processed digital image of the fingerprint is to be compared with fingerprint reference data, i.e. a digital image of at least a partial area of the fingerprint of the person who has the right to access to the sensitive information, stored on the data carrier in order to determine whether the right to access to the sensitive information exists.

11. A processing unit (2) as claimed in claim 10, wherein the signal processing means (7) is further adapted to perform operations on the sensitive information, based on rights assigned to the processing unit (2) by the data carrier (1).

12. A processing unit (2) as claimed in any one of claims 10-11, wherein the processing unit (2) is further provided with a sensor (8) for recording the digital image of the fingerprint of the person, whose right to access to the sensitive information is to be checked, in the form of a digital image.

13. A processing unit (2) as claimed in claim 12, wherein the signal processing means (7) in the pre-processing is adapted to carry out a binarisation of the digital image which represents the fingerprint

14. A processing unit as claimed in any one of claims 10-13, wherein the signal processing means (7) is adapted to determine the rotation as well as the translation of the digital image of the fingerprint relative to the fingerprint reference data.

15. A method of checking the right to access to sensitive information, stored on a portable data carrier (1), the checking being based on a digital image of a fingerprint of a person, whose right to access to sensitive information is to be checked, comprising the steps of
receiving, in a processing unit (2), the digital image of the fingerprint from the person whose right to access to sensitive information is to be checked;
receiving, in the processing unit (2) from the data carrier (1), feature reference data of a fingerprint for a person who has the right to access to the sensitive information;
pre-processing, in the processing unit (2), the digital image of the fingerprint, said pre-processing comprising extracting features from the digital image of the fingerprint and comparing them with the feature reference data;
transferring the pre-processed digital image of the fingerprint from the processing unit (2) to the data carrier (1);
comparing, on the data carrier (1), the pre-processed digital image of the fingerprint with fingerprint reference data stored on the data carrier (1), and comprising a digital image of at least a partial area of the fingerprint of the person who has a right to access to the sensitive information; and
in case of correspondence between the pre-processed digital image of the fingerprint and the fingerprint reference data, granting access to the sensitive information.

16. A method as claimed in claim 15, further comprising the step of
determining, with the aid of signal processing means (5) of the data carrier (1), which operations the processing unit (2) is allowed to perform on the sensitive information in case of correspondence between the pre-processed digital image of the fingerprint and the fingerprint reference data.

17. A method as claimed in any one of claims 15-16, further comprising the step of
recording, by means of the processing unit (2), the digital image of the fingerprint of the person whose right to access to the sensitive information is to be checked.

18. A method as claimed in any one of claims 15-17, wherein the step of comparing the transferred pre-processed digital image of the fingerprint with the fingerprint reference data comprises the step of comparing two digital images.

19. A method as claimed in claim 18, wherein the step of pre-processing the digital image of the fingerprint in the processing unit (2) comprises the step of binarising the digital image which represents the digital image of the fingerprint.

20. A method as claimed in any one of claims 15-19, wherein the step of comparing the pre-processed digital image of the fingerprint with fingerprint reference data comprises the step of
carrying out a two-dimensional comparison of said at least a partial area of the digital image of the fingerprint of the person who has the right to access to the sensitive information and at least a partial area of the pre-processed digital image of the fingerprint.

21. A method as claimed in any one of claims 15-20, further comprising the step of
determining, in the processing unit (2), the rotation as well as the translation of the digital image of the fingerprint relative to the fingerprint reference data.

22. A method in a portable data carrier (1) for checking the right to access to sensitive information stored in a memory of the data carrier, comprising the steps of
- transferring feature reference data of a fingerprint of a person who has the right to access to the sensitive information from the data carrier (1) to a processing unit (2) for pre-processing of a digital image of a fingerprint from a person, whose right to access to the sensitive data is to be checked;
- receiving the pre-processed digital image of the fingerprint from the processing unit (2);
- comparing the received pre-processed digital image of the fingerprint with fingerprint reference data stored in a memory on the data carrier, and comprising a digital image of at least a partial area of the fingerprint of the person who has the right to access to the sensitive information; and
- determining whether the right to access to the sensitive information exists.

23. A method as claimed in claim 22, wherein the step of comparing comprises performing a two-dimensional comparison of said at least a partial area of the fingerprint of the person who has the right to access the sensitive information and at least a partial area of the pre-processed digital image of the fingerprint.

24. A method in a processing unit (2) in connection with the checking of right to access to sensitive information, stored on a portable data carrier (1), the checking being based on a digital image of fingerprint of a person, whose right to access to sensitive information is to be checked, comprising the steps of
receiving the digital image of the fingerprint from the person whose right to access to sensitive information is to be checked;
receiving from the data carrier (1), feature reference data of a fingerprint for a person who has the right to access to the sensitive information;
pre-processing the digital image of the fingerprint, said pre-processing comprising extracting features from the digital image of the fingerprint and comparing them with the feature reference data; and
transferring the pre-processed digital image of the fingerprint, which comprises a digital image of the fingerprint of the person whose right to access is to be checked, to the data carrier (1), where the pre-processed digital image of the fingerprint is to be compared with reference fingerprint data stored on the data carrier and comprising a digital image of at least a partial area of the fingerprint of the person who has the right to access to the sensitive information in order to determine whether the right to access to the sensitive information exists.

25. A method according to claim 24, further comprising the step of determining the rotation as well as the translation of the digital image of the fingerprint relative to the fingerprint reference data.

## Patentansprüche

1. System zum Prüfen der Zugangsberechtigung zu vertraulichen Informationen, wobei das Prüfen auf einem digitalen Bild eines Fingerabdrucks einer Person, deren Zugangsberechtigung zu den vertraulichen Informationen zu prüfen ist, basiert und das System Folgendes umfasst:
- einen tragbaren Datenträger (1), umfassend eine Signalverarbeitungseinrichtung (5), eine Kommunikationseinrichtung (3) und einen Speicher (6), der die vertraulichen Informationen, Merkmal-Bezugsdaten eines Fingerabdrucks einer Person, die die Zugangsberechtigung zu den vertraulichen Informationen hat, und Fingerabdruck-Bezugsdaten, d. h. ein digitales Bild wenigstens eines Teilbereichs des Fingerabdrucks der Person, die die Zugangsberechtigung zu den vertraulichen Informationen hat, enthält; und
- eine Verarbeitungseinheit (2), die dazu eingerichtet ist, das digitale Bild des Fingerabdrucks von der Person, deren Zugangsberechtigung zu den vertraulichen Informationen zu prüfen ist, zu empfangen, und einen Speicher (10), eine Signalverarbeitungseinrichtung (7) und eine Kommunikationseinrichtung (4) umfasst;
wobei die Signalverarbeitungseinrichtung (7) der Verarbeitungseinheit (2) dazu eingerichtet ist, das digitale Bild des Fingerabdrucks vorzuverarbeiten, wobei das Vorverarbeiten Extrahieren von Merkmalen aus dem digitalen Bild des Fingerabdrucks und Vergleichen dieser mit den Merkmal-Bezugsdaten umfasst, die von dem Datenträger zu der Verarbeitungseinheit übertragen wurden, und das vorverarbeitete digitale Bild des Fingerabdrucks mit Hilfe der Kommunikationseinrichtungen (3, 4) zu der Signalverarbeitungseinrichtung (5) des Datenträgers (1) zu übertragen; und
wobei die Signalverarbeitungseinrichtung (5) des Datenträgers (1) dazu eingerichtet ist, das empfangene vorverarbeitete digitale Bild des Fingerabdrucks mit den Fingerabdruck-Bezugsdaten, die vorab in dem Speicher (6) des Datenträgers (1) gespeichert wurden, zu vergleichen, um zu bestimmen, ob die Zugangsberechtigung zu den vertraulichen Informationen besteht.

2. System nach Anspruch 1, wobei die Signalverarbeitungseinrichtung (7) der Verarbeitungseinheit (2) bei der Vorverarbeitung dazu eingerichtet ist, eine Binarisierung des digitalen Bildes des Fingerabdrucks durchzuführen.

3. System nach einem der vorhergehenden Ansprüche, wobei die Signalverarbeitungseinrichtung (5) des Datenträgers (1) dazu eingerichtet ist, einen zweidimensionalen Vergleich des wenigstens einen Teilbereichs des Fingerabdrucks der Person, die die Zugangsberechtigung zu den vertraulichen Informationen hat, und wenigstens eines Teilbereichs des vorverarbeiteten digitalen Bildes des Fingerabdrucks durchzuführen.

4. System nach einem der vorhergehenden Ansprüche, wobei die Signalverarbeitungseinrichtung (5) des Datenträgers (1) des Weiteren dazu eingerichtet ist, bei Entsprechung zwischen dem vorverarbeiteten digitalen Bild des Fingerabdrucks und den Fingerabdruck-Bezugsdaten zu bestimmen, welche Operationen die Verarbeitungseinheit (2) an den vertraulichen Informationen durchführen darf.

5. System nach einem der vorhergehenden Ansprüche, wobei der Datenträger (1) eine Chip-Karte ist.

6. System nach einem der vorhergehenden Ansprüche, wobei die Signalverarbeitungseinrichtung (7) der Verarbeitungseinheit (2) zum Bestimmen der Drehung sowie der Übersetzung des digitalen Bildes des Fingerabdrucks relativ zu den Fingerabdruck-Bezugsdaten eingerichtet ist.

7. Tragbarer Datenträger (1), umfassend eine Signalverarbeitungseinrichtung (5), eine Kommunikationseinrichtung (3) und einen Speicher (6), der vertrauliche Informationen, Merkmal-Bezugsdaten eines Fingerabdrucks einer Person, die die Zugangsberechtigung zu den vertraulichen Informationen hat, und Fingerabdruck-Bezugsdaten, d. h. ein digitales Bild wenigstens eines Teilbereichs des Fingerabdrucks der Person, die die Zugangsberechtigung zu den vertraulichen Informationen hat, enthält; wobei die Signalverarbeitungseinrichtung (5) dazu eingerichtet ist, die Merkmal-Bezugsdaten zu einer Verarbeitungseinheit (2) zu übertragen, um ein digitales Bild eines Fingerabdrucks für eine Person, deren Zugangsberechtigung zu den vertraulichen Informationen zu prüfen ist, vorzuverarbeiten; wobei die Kommunikationseinrichtung (3) dazu eingerichtet ist, das vorverarbeitete digitale Bild des Fingerabdrucks von der Verarbeitungseinheit (2) zu empfangen und selbiges zu der Signalverarbeitungseinrichtung (5) zu übertragen; und wobei die Signalverarbeitungseinrichtung (5) dazu eingerichtet ist, das empfangene vorverarbeitete digitale Bild des Fingerabdrucks mit den Fingerabdruck-Bezugsdaten, die in dem Speicher (6) gespeichert sind, zu vergleichen, um zu bestimmen, ob die Zugangsberechtigung zu den vertraulichen Informationen besteht.

8. Tragbarer Datenträger nach Anspruch 7, wobei die Signalverarbeitungseinrichtung (5) zum Durchführen eines zweidimensionalen Vergleichs des wenigstens einen Teilbereichs des Fingerabdrucks der Person, die die Zugangsberechtigung zu den vertraulichen Informationen hat, und wenigstens eines Teilbereichs des vorverarbeiteten digitalen Bildes des Fingerabdrucks eingerichtet ist.

9. Tragbarer Datenträger nach Anspruch 7 oder 8, wobei der Datenträger eine Chip-Karte ist.

10. Verarbeitungseinheit (2) zur Verwendung beim Prüfen der Zugangsberechtigung zu vertraulichen Informationen, die auf einem tragbaren Datenträger (1) gespeichert sind, wobei das Prüfen auf einem digitalen Bild eines Fingerabdrucks einer Person, deren Zugangsberechtigung zu den vertraulichen Informationen zu prüfen ist, basiert und die Verarbeitungseinheit (2), die zum Empfangen des digitalen Bildes des Fingerabdrucks eingerichtet ist, einen Speicher (10), eine Signalverarbeitungseinrichtung (7) und eine Kommunikationseinrichtung (4) umfasst; wobei die Signalverarbeitungseinrichtung (7) zum Vorverarbeiten des digitalen Bildes des Fingerabdrucks eingerichtet ist und das Vorverarbeiten umfasst, Merkmale aus dem digitalen Bild des Fingerabdrucks zu extrahieren und sie mit Merkmal-Bezugsdaten eines Fingerabdrucks einer Person, die die Zugangsberechtigung zu den vertraulichen Informationen hat, zu vergleichen, wobei die Merkmal-Bezugsdaten von einem Datenträger zu der Verarbeitungseinheit übertragen wurden, und das vorverarbeitete digitale Bild des Fingerabdrucks, das ein digitales Bild eines Fingerabdrucks der Person, deren Zugangsberechtigung zu den vertraulichen Informationen zu prüfen ist, umfasst, zu dem Datenträger zu übertragen, wo das vorverarbeitete digitale Bild des Fingerabdrucks mit auf dem Datenträger gespeicherten Fingerabdruck-Bezugsdaten, d. h. ein digitales Bild wenigstens eines Teilbereichs des Fingerabdrucks der Person, die die Zugangsberechtigung zu den vertraulichen Informationen hat, zu vergleichen ist, um zu bestimmen, ob die Zugangsberechtigung zu den vertraulichen Informationen besteht.

11. Verarbeitungseinheit (2) nach Anspruch 10, wobei die Signalverarbeitungseinrichtung (7) des Weiteren zum Durchführen von Operationen an den vertraulichen Informationen auf Basis von Berechtigungen, die der Verarbeitungseinheit (2) von dem Datenträger (1) zugewiesen werden, eingerichtet ist.

12. Verarbeitungseinheit (2) nach einem der vorhergehenden Ansprüche 10 bis 11, wobei die Verarbeitungseinheit (2) des Weiteren mit einem Sensor (8) ausgestattet ist, um das digitale Bild des Fingerabdrucks der Person, deren Zugangsberechtigung zu den vertraulichen Informationen zu prüfen ist, in der Form eines digitalen Bildes aufzuzeichnen.

13. Verarbeitungseinheit (2) nach Anspruch 12, wobei die Signalverarbeitungseinrichtung (7) bei der Vorverarbeitung dazu eingerichtet ist, eine Binarisierung des digitalen Bildes, das den Fingerabdruck darstellt, durchzuführen.

14. Verarbeitungseinheit nach einem der vorhergehenden Ansprüche 10 bis 13, wobei die Signalverarbeitungseinrichtung (7) zum Bestimmen der Drehung sowie der Übersetzung des digitalen Bildes des Fingerabdrucks relativ zu den Fingerabdruck-Bezugsdaten eingerichtet ist.

15. Verfahren zum Prüfen der Zugangsberechtigung zu vertraulichen Informationen, die auf einem tragbaren Datenträger (1) gespeichert sind, wobei das Prüfen auf einem digitalen Bild eines Fingerabdrucks einer Person, deren Zugangsberechtigung zu vertraulichen Informationen zu prüfen ist, basiert, die folgenden Schritte umfassend:
- Empfangen des digitalen Bildes des Fingerabdrucks von der Person, deren Zugangsberechtigung zu vertraulichen Informationen zu prüfen ist, in einer Verarbeitungseinheit (2);
- Empfangen von Merkmal-Bezugsdaten eines Fingerabdrucks für eine Person, die die Zugangsberechtigung zu vertraulichen Informationen hat, von dem Datenträger (1) in der Verarbeitungseinheit (2);
- Vorverarbeiten des digitalen Bildes des Fingerabdrucks in der Verarbeitungseinheit (2), wobei das Vorverarbeiten Extrahieren von Merkmalen aus dem digitalen Bild des Fingerabdrucks und Vergleichen dieser mit den Merkmal-Bezugsdaten umfasst;
- Übertragen des vorverarbeiteten digitalen Bildes des Fingerabdrucks von der Verarbeitungseinheit (2) zu dem Datenträger (1);
- Vergleichen des vorverarbeiteten digitalen Bildes des Fingerabdrucks mit Fingerabdruck-Bezugsdaten, die auf dem Datenträger (1) gespeichert sind und ein digitales Bild wenigstens eines Teilbereichs des Fingerabdrucks der Person, die eine Zugangsberechtigung zu den vertraulichen Informationen hat, umfassen, auf dem Datenträger (1); und
- bei Entsprechung zwischen dem vorverarbeiteten digitalen Bild des Fingerabdrucks und den Fingerabdruck-Bezugsdaten Gewähren von Zugang zu den vertraulichen Informationen.

16. Verfahren nach Anspruch 15, des Weiteren folgenden Schritt umfassend:
- Bestimmen mit Hilfe der Signalverarbeitungseinrichtung (5) des Datenträgers (1), welche Operationen die Verarbeitungseinheit (2) bei Entsprechung zwisehen dem vorverarbeiteten digitalen Bild des Fingerabdrucks und den Fingerabdruck-Bezugsdaten an den vertraulichen Informationen durchführen darf.

17. Verfahren nach einem der Ansprüche 15 bis 16, des Weiteren folgenden Schritt umfassend:
- Aufzeichnen des digitalen Bildes des Fingerabdrucks der Person, deren Zugangsberechtigung zu den vertraulichen Informationen zu prüfen ist, mit Hilfe der Verarbeitungseinheit (2).

18. Verfahren nach einem der Ansprüche 15 bis 17, wobei der Schritt des Vergleichens des übertragenen vorverarbeiteten digitalen Bildes des Fingerabdrucks mit den Fingerabdruck-Bezugsdaten den Schritt des Vergleichens zweier digitaler Bilder umfasst.

19. Verfahren nach Anspruch 18, wobei der Schritt des Vorverarbeitens des digitalen Bildes des Fingerabdrucks in der Verarbeitungseinheit (2) den Schritt des Binarisierens des digitalen Bildes, das das digitale Bild des Fingerabdrucks darstellt, umfasst.

20. Verfahren nach einem der Ansprüche 15 bis 19, wobei der Schritt des Vergleichens des vorverarbeiteten digitalen Bildes des Fingerabdrucks mit Fingerabdruck-Bezugsdaten folgenden Schritt umfasst:
- Durchführen eines zweidimensionalen Vergleichs des wenigstens einen Teilbereichs des digitalen Bildes des Fingerabdrucks der Person, die die Zugangsberechtigung zu den vertraulichen Informationen hat, und wenigstens eines Teilbereichs des vorverarbeiteten digitalen Bildes des Fingerabdrucks.

21. Verfahren nach einem der Ansprüche 15 bis 20, des Weiteren folgenden Schritt umfassend:
- Bestimmen, in der Verarbeitungseinheit (2), der Drehung sowie der Übersetzung des digitalen Bildes des Fingerabdrucks relativ zu den Fingerabdruck-Bezugsdaten.

22. Verfahren in einem tragbaren Datenträger (1) zum Prüfen der Zugangsberechtigung zu vertraulichen Informationen, die in einem Speicher des Datenträgers gespeichert sind, folgende Schritte umfassend:
- Übertragen von Merkmal-Bezugsdaten eines Fingerabdrucks einer Person, die die Zugangsberechtigung zu den vertraulichen Informationen hat, von dem Datenträger (1) zu einer Verarbeitungseinheit (2) zum Vorverarbeiten eines digitalen Bildes eines Fingerabdrucks von einer Person, deren Zugangsberechtigung zu den vertraulichen Daten zu prüfen ist;
- Empfangen des vorverarbeiteten digitalen Bildes des Fingerabdrucks von der Verarbeitungseinheit (2);
- Vergleichen des empfangenen vorverarbeiteten digitalen Bildes des Fingerabdrucks mit Fingerabdruck-Bezugsdaten, die in einem Speicher auf dem Datenträger gespeichert sind und ein digitales Bild wenigstens eines Teilbereichs des Fingerabdrucks der Person, die die Zugangsberechtigung zu den vertraulichen Informationen hat, umfassen; und
- Bestimmen, ob die Zugangsberechtigung zu den vertraulichen Informationen besteht.

23. Verfahren nach Anspruch 22, wobei der Schritt des Vergleichens das Durchführen eines zweidimensionalen Vergleichs des wenigstens einen Teilbereichs des Fingerabdrucks der Person, die die Zugangsberechtigung zu den vertraulichen Informationen hat, und wenigstens eines Teilbereichs des vorverarbeiteten digitalen Bildes des Fingerabdrucks umfasst.

24. Verfahren in einer Verarbeitungseinheit (2) in Verbindung mit dem Prüfen von Zugangsberechtigung zu vertraulichen Informationen, die auf einem tragbaren Datenträger (1) gespeichert sind, wobei das Prüfen auf einem digitalen Bild eines Fingerabdrucks einer Person, deren Zugangsberechtigung zu vertraulichen Informationen zu prüfen ist, basiert, folgende Schritte umfassend:
- Empfangen des digitalen Bildes des Fingerabdrucks von der Person, deren Zugangsberechtigung zu vertraulichen Informationen zu prüfen ist;
- Empfangen von Merkmal-Bezugsdaten eines Fingerabdrucks für eine Person, die die Zugangsberechtigung zu den vertraulichen Informationen hat, von dem Datenträger (1);
- Vorverarbeiten des digitalen Bildes des Fingerabdrucks, wobei das Vorverarbeiten Extrahieren von Merkmalen aus dem digitalen Bild des Fingerabdrucks und Vergleichen dieser mit den Merkmal-Bezugsdaten umfasst; und
- Übertragen des vorverarbeiteten digitalen Bildes des Fingerabdrucks, das ein digitales Bild des Fingerabdrucks der Person, deren Zugangsberechtigung zu prüfen ist, umfasst, zu dem Datenträger (1), wo das vorverarbeitete digitale Bild des Fingerabdrucks zu vergleichen ist mit Bezugsfingerabdruckdaten, die auf dem Datenträger gespeichert sind und ein digitales Bild wenigstens eines Teilbereichs des Fingerabdrucks der Person, die die Zugangsberechtigung zu den vertraulichen Informationen hat, umfassen, um zu bestimmen, ob die Zugangsberechtigung zu den vertraulichen Informationen besteht.

25. Verfahren nach Anspruch 24, des Weiteren den Schritt des Bestimmens der Drehung sowie der Übertragung des digitalen Bildes des Fingerabdrucks relativ zu den Fingerabdruck-Bezugsdaten umfassend.

## Revendications

1. Système destiné à contrôler le droit d'accès à des informations sensibles, le contrôle étant basé sur une image numérique d'une empreinte digitale d'une personne dont le droit d'accès aux informations sensibles doit être contrôlé, le système comprenant
- un support de données portable (1) comprenant un moyen de traitement de signal (5), un moyen de communication (3) et une mémoire (6) contenant les informations sensibles, des données de référence de caractéristiques d'une empreinte digitale d'une personne qui a le droit d'accéder aux informations sensibles et des données de référence d'empreinte digitale, à savoir une image numérique d'au moins une zone partielle de l'empreinte digitale de la personne qui a le droit d'accéder aux informations sensibles, et
- une unité de traitement (2), qui est adaptée pour recevoir l'image numérique de l'empreinte digitale de la personne dont le droit d'accès aux informations sensibles doit être contrôlé, comprenant une mémoire (10), un moyen de traitement de signal (7), et un moyen de communication (4),
dans lequel le moyen de traitement de signal (7) de l'unité de traitement (2) est adapté pour pré-traiter l'image numérique de l'empreinte digitale, le pré-traitement comprenant l'extraction de caractéristiques de l'image numérique de l'empreinte digitale et leur comparaison avec les données de référence de caractéristiques qui ont été transférées du support de données vers l'unité de traitement, et pour transférer l'image numérique pré-traitée de l'empreinte digitale au moyen de traitement de signal (5) du support de données (1) à l'aide du moyen de communication (3, 4), et
dans lequel le moyen de traitement de signal (5) du support de données (1) est adapté pour comparer l'image numérique pré-traitée reçue de l'empreinte digitale avec les données de référence d'empreinte digitale stockées à l'avance dans la mémoire (6) du support de données (1) pour déterminer si le droit d'accès aux informations sensibles existe.

2. Système selon la revendication 1, dans lequel le moyen de traitement de signal (7) de l'unité de traitement (2) est, dans le pré-traitement, adapté pour exécuter une binarisation de l'image numérique de l'empreinte digitale.

3. Système selon l'une quelconque des revendications précédentes, dans lequel le moyen de traitement de signal (5) du support de données (1) est adapté pour exécuter une comparaison bidimensionnelle de ladite au moins une zone partielle de l'empreinte digitale de la personne qui a le droit d'accéder aux informations sensibles et d'au moins une zone partielle de l'image numérique pré-traitée de l'empreinte digitale.

4. Système selon l'une quelconque des revendications précédentes, dans lequel le moyen de traitement de signal (5) du support de données (1) est en outre adapté pour déterminer, dans le cas d'une correspondance entre l'image numérique pré-traitée de l'empreinte digitale et les données de référence d'empreinte digitale, quelles opérations l'unité de traitement (2) est autorisée à réaliser sur les informations sensibles.

5. Système selon l'une quelconque des revendications précédentes, dans lequel le support de données (1) est une carte à puce intelligente.

6. Système selon l'une quelconque des revendications précédentes, dans lequel le moyen de traitement de signal (7) de l'unité de traitement (2) est adapté pour déterminer la rotation ainsi que la translation de l'image numérique de l'empreinte digitale par rapport aux données de référence d'empreinte digitale.

7. Support de données portable (1) comprenant un moyen de traitement de signal (5), un moyen de communication (3) et une mémoire (6) contenant des informations sensibles, des données de référence de caractéristiques d'une empreinte digitale d'une personne, qui a le droit d'accéder aux informations sensibles, et des données de référence d'empreinte digitale, à savoir une image numérique d'au moins une zone partielle de l'empreinte digitale de la personne qui a le droit d'accéder aux informations sensibles ;
dans lequel le moyen de traitement de signal (5) est adapté pour transférer les données de référence de caractéristiques vers une unité de traitement (2) pour pré-traiter une image numérique d'une empreinte digitale pour une personne dont le droit d'accès aux informations sensibles doit être contrôlé ;
dans lequel le moyen de communication (3) est adapté pour recevoir l'image numérique pré-traitée de l'empreinte digitale provenant de l'unité de traitement (2) et pour transférer celle-ci vers le moyen de traitement de signal (5) ; et
dans lequel le moyen de traitement de signal (5) est adapté pour comparer l'image numérique pré-traitée reçue de l'empreinte digitale avec les données de référence d'empreinte digitale stockées dans la mémoire (6) afin de déterminer si le droit d'accès aux informations sensibles existe.

8. Support de données portable selon la revendication 7, dans lequel l'unité de traitement de signal (5) est adaptée pour exécuter une comparaison bidimensionnelle de ladite au moins une zone partielle de l'empreinte digitale de la personne qui a le droit d'accéder aux informations sensibles et d'au moins une zone partielle de l'image numérique pré-traitée de l'empreinte digitale.

9. Support de données portable selon la revendication 7 ou 8, dans lequel le support de données est une carte à puce intelligente.

10. Unité de traitement (2) destinée à être utilisée lors du contrôle du droit d'accès à des informations sensibles stockées sur un support de données portable (1), ledit contrôle étant basé sur une image numérique d'une empreinte digitale d'une personne dont le droit d'accès aux informations sensibles doit être contrôlé, l'unité de traitement (2), qui est adaptée pour recevoir l'image numérique de l'empreinte digitale, comprenant une mémoire (10), un moyen de traitement de signal (7) et un moyen de communication (4) ;
dans laquelle le moyen de traitement de signal (7) est adapté pour pré-traiter l'image numérique de l'empreinte digitale, le pré-traitement comprenant l'extraction de caractéristiques de l'image numérique de l'empreinte digitale et leur comparaison avec des données de référence de caractéristiques d'une empreinte digitale d'une personne qui a le droit d'accéder aux informations sensibles, lesquelles données de référence de caractéristiques ont été transférées d'un support de données vers l'unité de traitement, et pour transférer l'image numérique pré-traitée de l'empreinte digitale, qui comprend une image numérique d'une empreinte digitale de la personne dont le droit d'accès aux informations sensibles doit être contrôlé, vers le support de données, où l'image numérique pré-traitée de l'empreinte digitale doit être comparée avec des données de référence d'empreinte digitale, à savoir une image numérique d'au moins une zone partielle de l'empreinte digitale de la personne qui a le droit d'accéder aux informations sensibles, stockées sur le support de données afin de déterminer si le droit d'accès aux informations sensibles existe.

11. Unité de traitement (2) selon la revendication 10, dans laquelle le moyen de traitement de signal (7) est en outre adapté pour exécuter des opérations sur les informations sensibles, sur la base de droits attribués à l'unité de traitement (2) par le support de données (1).

12. Unité de traitement (2) selon l'une quelconque des revendications 10 à 11, dans laquelle l'unité de traitement (2) est en outre munie d'un capteur (8) destiné à enregistrer l'image numérique de l'empreinte digitale de la personne, dont le droit d'accès aux informations sensibles doit être contrôlé, sous la forme d'une image numérique.

13. Unité de traitement (2) selon la revendication 12, dans laquelle le moyen de traitement de signal (7) dans le pré-traitement est adapté pour réaliser une binarisation de l'image numérique qui représente l'empreinte digitale.

14. Unité de traitement selon l'une quelconque des revendications 10 à 13, dans laquelle le moyen de traitement de signal (7) est adapté pour déterminer la rotation ainsi que la translation de l'image numérique de l'empreinte digitale par rapport aux données de référence d'empreinte digitale.

15. Procédé de contrôle du droit d'accès à des informations sensibles, stockées sur un support de données portable (1), le contrôle étant basé sur une image numérique d'une empreinte digitale d'une personne dont le droit d'accès aux informations sensibles doit être contrôlé, comprenant les étapes consistant à
recevoir, dans une unité de traitement (2), l'image numérique de l'empreinte digitale de la personne dont le droit d'accès aux informations sensibles doit être contrôlé ;
recevoir, dans l'unité de traitement (2), en provenance du support de données (1), des données de référence de caractéristiques d'une empreinte digitale pour une personne qui a le droit d'accéder aux informations sensibles ;
pré-traiter, dans l'unité de traitement (2), l'image numérique de l'empreinte digitale, ledit pré-traitement comprenant l'extraction de caractéristiques de l'image numérique de l'empreinte digitale et leur comparaison avec les données de référence de caractéristiques ;
transférer l'image numérique pré-traitée de l'empreinte digitale de l'unité de traitement (2) vers le support de données (1) ;
comparer, sur le support de données (1), l'image numérique pré-traitée de l'empreinte digitale avec les données de référence d'empreinte digitale stockées sur le support de données (1), et comprenant une image numérique d'au moins une zone partielle de l'empreinte digitale de la personne qui a le droit d'accéder aux informations sensibles ; et
dans le cas d'une correspondance entre l'image numérique pré-traitée de l'empreinte digitale et les données de référence d'empreinte digitale, octroyer l'accès aux informations sensibles.

16. Procédé selon la revendication 15, comprenant en outre l'étape consistant à
déterminer, à l'aide du moyen de traitement de signal (5) du support de données (1), quelles opérations l'unité de traitement (2) est autorisée à exécuter sur les informations sensibles dans le cas d'une correspondance entre l'image numérique pré-traitée de l'empreinte digitale et les données de référence d'empreinte digitale.

17. Procédé selon l'une quelconque des revendications 15 à 16, comprenant en outre l'étape consistant à
enregistrer, au moyen de l'unité de traitement (2), l'image numérique de l'empreinte digitale de la personne dont le droit d'accès aux informations sensibles doit être contrôlé.

18. Procédé selon l'une quelconque des revendications 15 à 17, dans lequel l'étape de comparaison de l'image numérique pré-traitée transférée de l'empreinte digitale avec les données de référence d'empreinte digitale comprend l'étape consistant à comparer deux images numériques.

19. Procédé selon la revendication 18, dans lequel l'étape de pré-traitement de l'image numérique de l'empreinte digitale dans l'unité de traitement (2) comprend l'étape consistant à binariser l'image numérique qui représente l'image numérique de l'empreinte digitale.

20. Procédé selon l'une quelconque des revendications 15 à 19, dans lequel l'étape de comparaison de l'image numérique pré-traitée de l'empreinte digitale avec des données de référence d'empreinte digitale comprend l'étape consistant à
réaliser une comparaison bidimensionnelle de ladite au moins une zone partielle de l'image numérique de l'empreinte digitale de la personne qui a le droit d'accéder aux informations sensibles et d'au moins une zone partielle de l'image numérique pré-traitée de l'empreinte digitale.

21. Procédé selon l'une quelconque des revendications 15 à 20, comprenant en outre l'étape consistant à
déterminer, dans l'unité de traitement (2), la rotation ainsi que la translation de l'image numérique de l'empreinte digitale par rapport aux données de référence d'empreinte digitale.

22. Procédé dans un support de données portable (1) destiné à contrôler le droit d'accès à des informations sensibles, stockées dans une mémoire du support de données, comprenant les étapes consistant à
- transférer des données de référence de caractéristiques d'une empreinte digitale d'une personne qui a le droit d'accéder aux informations sensibles, du support de données (1) vers une unité de traitement (2), pour le pré-traitement d'une image numérique d'une empreinte digitale d'une personne dont le droit d'accès aux données sensibles doit être contrôlé ;
- recevoir l'image numérique pré-traitée de l'empreinte digitale provenant de l'unité de traitement (2) ;
- comparer l'image numérique pré-traitée reçue de l'empreinte digitale avec des données de référence d'empreinte digitale stockées dans une mémoire sur le support de données, et comprenant une image numérique d'au moins une zone partielle de l'empreinte digitale de la personne qui a le droit d'accéder aux informations sensibles ; et
- déterminer si le droit d'accès aux informations sensibles existe.

23. Procédé selon la revendication 22, dans lequel l'étape de comparaison comprend l'exécution d'une comparaison bidimensionnelle de ladite au moins une zone partielle de l'empreinte digitale de la personne qui a le droit d'accéder aux informations sensibles et d'au moins une zone partielle de l'image numérique pré-traitée de l'empreinte digitale.

24. Procédé dans une unité de traitement (2) en liaison avec le contrôle du droit d'accès à des informations sensibles, stockées sur un support de données portable (1), le contrôle étant basé sur une image numérique d'une empreinte digitale d'une personne dont le droit d'accès aux informations sensibles doit être contrôlé, comprenant les étapes consistant à
recevoir l'image numérique de l'empreinte digitale de la personne dont le droit d'accès aux informations sensibles doit être contrôlé ;
recevoir, du support de données (1), des données de référence de caractéristiques d'une empreinte digitale pour une personne qui a le droit d'accéder aux informations sensibles ;
pré-traiter l'image numérique de l'empreinte digitale, ledit pré-traitement comprenant l'extraction de caractéristiques de l'image numérique de l'empreinte digitale et leur comparaison avec les données de référence de caractéristiques ; et
transférer l'image numérique pré-traitée de l'empreinte digitale, qui comprend une image numérique de l'empreinte digitale de la personne dont le droit d'accès doit être contrôlé, vers le support de données (1), où l'image numérique pré-traitée de l'empreinte digitale doit être comparée avec des données d'empreinte digitale de référence sur le support de données et comprenant une image numérique d'au moins une zone partielle de l'empreinte digitale de la personne qui a le droit d'accéder aux informations sensibles afin de déterminer si le droit d'accès aux informations sensibles existe.

25. Procédé selon la revendication 24, comprenant en outre l'étape consistant à déterminer la rotation ainsi que la translation de l'image numérique de l'empreinte digitale par rapport aux données de référence d'empreinte digitale.
